(19)

Europäisches
Patentamt
European
Patent Office
Office européen
des brevets

(11)     EP 1 739 911 A2

(12)     EUROPEAN PATENT APPLICATION

(43) Date of publication:
03.01.2007   Bulletin 2007/01

(51) Int Cl.:
*H04L 27/26* (2006.01)

(21) Application number: 06013408.7

(22) Date of filing: 28.06.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 30.06.2005   CN 200510080594

(71) Applicant: NTT DoCoMo Inc.
Chiyoda-ku
Tokyo 100-6150 (JP)

(72) Inventors:
• Zhang, Zhonghan,
7/F Raycom Infotech Park
Haidian District
Beijing, 100080 (CN)
• Kayama, Hidetoshi,
7/F Raycom Infotech Park
Haidian District
Beijing, 100080 (CN)

(74) Representative: Schoppe, Fritz et al
Schoppe, Zimmermann, Stöckeler & Zinkler
Patentanwälte
Postfach 246
82043 Pullach bei München (DE)

(54)     **A training sequence generating method, a communication system and communication method**

(57)     The present invention provides a method for generating a training sequence for joint frame synchronization and carrier frequency offset estimation and a communication system and method using the training sequence. The said training sequence includes a first training symbol and a second training symbol of equal-length, but without cyclic prefix (CP). The method for generating the said training sequence includes generating the first training symbol randomly according to the method for generating normal data symbols; subdividing the generated first training symbol logically into M sub-blocks with equal-length, wherein the structure characteristic M is a natural number larger than or equal to 1 and less than or equal to N; and copying the said M sub-blocks in an reverse order to form the second training symbol, which together with the first training symbol constitute the said training sequence.

Fig. 1

## EP 1 739 911 A2

**Description**

Field of the Invention

The present invention relates to an OFDM communication system and method, especially relates to a generating method of the training sequence and a communication system and method performing joint frame synchronization and carrier frequency offset estimation in the downlink transmission in the OFDM system by using the training sequence.

Background

Currently, there are many classical algorithms for the downlink synchronization in the OFDM system (references [1]-[7]). The training sequences adopted in many classical algorithms include two or more same sub-blocks (see references [3], [5], and [6]) by which the receiver can achieve effective training sequence detecting and to realize timing synchronization. At the same time, the receiver can estimate the carrier frequency offset effectively with the phase angles between these repeated sub-blocks in the training sequence. However, when the training sequence with the repeated mode is used for timing synchronization, the precision is not much high and it tends to cause a large synchronization error. And the acquisition range of the carrier frequency offset of this type training sequence is not very large (see reference [1], [6]). Some classical algorithms can extend the acquisition range of the carrier frequency offset (reference [3]), but the calculation complexity increases apparently, which is not good for the design of the simple and effective receiver in the future broadband mobile communication system.

Reference [7] proposes a specific training sequence with a central symmetry structure, which is used for joint frame synchronization and carrier frequency offset estimation in the downlink transmission in the OFDM system. The said training sequence includes two training symbols and the content of the second training symbol is the reverse repetition of that of the first training symbol. This kind of central symmetry structure can guarantee highly precise timing synchronization at the receiver side and the acquisition range of the carrier frequency offset can reach at most a half of the whole transmission bandwidth. In flat-fading channels, the said training sequence can achieve a higher precision than the classical training sequence when used for carrier frequency offset tracking (minute estimation); but in multipath fading channels, only the signal on a path with the largest power is used for carrier frequency offset estimation and the signals on other paths are considered as interference noises, so the effective signal interference noise ratio (SINR) is reduced, which leads to the decrease of the estimation precision.

It can be seen from the above that the training sequence with a central symmetry structure can realize highly precise timing synchronization and the acquisition range of the carrier frequency offset is large, but the carrier frequency offset estimation precision is low in multipath channel environment; in contrast, the training sequence with repeated sub-blocks has a high carrier frequency offset estimation precision in multipath channel environment, but the timing synchronization precision is low and the acquisition range of the carrier frequency offset is limited.

In the future mobile communication system, the receiver is required to realize fast and accurate synchronization with the ongoing increase of system bandwidth and data speed. The synchronization precision of the training sequence used in the synchronization system is required to be high and the calculation complexity is required to be low. It is key of the training sequence design to effectively combine the structure characteristics of the aforementioned two training sequences and to realize accurate OFDM downlink frame synchronization and highly precise and large range carrier frequency offset estimation.

References [1]-[7]

[1] J.-J. van de Beek and M. Sandell, "ML estimation of time and frequency offset in OFDM systems," IEEE Trans. Signal Processing., vol. 45, pp.1800-1805, July 1997.

[2] H. Nogami and T. Nagashima, "A frequency and timing period acquisition technique for OFDM system," Personal, Indoor and Mobile Radio Commun. (PIMRC), pp.1010-1015, September 27-29, 1995.

[3] M.Morelli and V.Mengali, "An improved frequency offset estimator for OFDM applications," IEEE Commun. Lett., vol. 3, pp.75-77, March 1999.

[4] T. Keller and L. Piazzo, "Orthogonal Frequency Division Multiplex Synchronization Techniques for Frequency-Selective Fading Channels," IEEE Journal on Selected Areas in Communications, vol.19, No.6, pp.999-1008, June 2001.

[5] T. M. Schmidl and D. C. Cox, "Robust Frequency and Timing Synchronization for OFDM," IEEE Trans. Comm., vol. 45, pp.1613-1621, December 1997.

[6] P.H. Moose, "A technique for orthogonal frequency division multiplexing frequency offset correction," IEEE Trans.

Comm., vol. 42, pp.2908-2914, October 1994.

[7] Z.Zhang and M.Zhao, "Frequency offset estimation with fast acquisition in OFDM system," IEEE Commun. Lett., vol.8, pp.171-173, Mar.2004.

Brief Description of the Invention

The present invention is to realize accurate OFDM downlink frame synchronization and highly precise and large range carrier frequency offset estimation.

The first object of the present invention is to provide a training sequence by joint the structure characteristics of the two traning sequences with central symmetry structure and repeated data blocks structure respectively, which can realize accurate timing synchronization and highly precise and large range carrier frequency offset estimation,.

The second object of the present invention is to provide a frame structure based on the training sequence provided by the first object of the present invention.

The third object of the present invention is to provide an adaptive method for OFDM downlink joint frame synchronization and carrier frequence offset estimation, which can realize accurate OFDM downlink frame synchronization and highly precise and large range carrier frequency offset estimation.

The fourth object of the present invention is to provide an adaptive communication system for OFDM downlink joint frame synchronization and carrier frequence offset estimation, which can realize accurate OFDM downlink frame synchronization and highly precise and large range carrier frequency offset estimation.

According to the first aspect of the present invention, a training sequence generating method is provided. The said training sequence includes a first training symbol and a second training symbol with equal-length, but without CP, which is characterized in that, generating the first training symbol randomly according to the method for generating normal data symbols; subdividing the generated first training symbol logically into M sub-blocks with equal-length, wherein the structure characteristic M is a natural number larger than or equal to 1 and less than or equal to N; and copying the said M sub-blocks in an reverse order to form the second training symbol, which together with the first training symbol constitute the said training sequence.

According to the second aspect of the present invention, a first-type OFDM frame is provided, which is characterized in that the said first-type OFDM frame includes two first-type training sequences and data symbols, wherein the structure characteristic M of the first-type training sequence is equal to N.

According to the second aspect of the present invention, a second-type OFDM frame is provided, which is characterized in that said second-type OFDM frame includes a first-type training sequence, a second-type training sequence and data symbols, wherein the structure characteristic M of the first-type training sequence is equal to N, the structure characteristic M of the second-type training sequence is a natural number larger than or equal to 1 and less than N.

According to the third aspect of the present invention, a communication method is provided, which uses the first-type OFDM frame and the second-type OFDM frame, the said first and second-type OFDM frames utilize the training sequence generated by the method defined in claim 1, the said first-type OFDM frame includes two first-type training sequences and data symbols, wherein the structure characteristic M of the first-type training sequence is equal to N, and the said second-type OFDM frame includes a first-type training sequence, a second-type training sequence and data symbols, wherein the structure characteristic M of the first-type training sequence is equal to N, the structure characteristic M of the second-type training sequence is a natural number larger than or equal to 1 and less than N, the communication method is characterized in that the communication method includes the following steps,

a) the base station transmits the first-type OFDM frame to the mobile terminal firstly;

b) the mobile terminal performs the initial acquisition for the first-type training sequence of the first-type OFDM frame, i.e. performs timing synchronization and initial carrier frequency offset estimation, then transmits the optimal structure characteristic M determined by the initial acquisition result to the base station, then uses the second first-type training sequence of the first-type OFDM frame to perform adaptive tracking, obtains the carrier frequency offset tracking result, and finally uses the sum of the initial acquisition result and the carrier frequency offset tracking result to perform the carrier frequency offset compensation, so that the carrier frequency offset estimation of the first-type OFDM frame is achieved;

c) the base station generates the second-type OFDM frame according to the optimal structure characteristic M of the previous frame from the said terminal and transmits it to the said mobile terminal again;

d) the mobile terminal performs again the initial acquisition for the first-type training sequence of the second-type OFDM frame to obtain the initial carrier frequency offset of the second-type OFDM frame, then transmits the currently optimal structure characteristic M determined by the initial acquisition result to the base station, then uses the second second-type training sequence of the second-type OFDM frame to perform adaptive tracking, obtains the carrier frequency offset tracking result, and finally uses the sum of the initial acquisition result and the carrier frequency offset tracking result to perform the carrier frequency offset compensation, so that the carrier frequency offset estimation of the second-type OFDM frame is achieved;

e) the base station and the mobile terminal repeat step c) and d) until the end of communication.

According to the third aspect of the present invention, a communication method is provided, which uses the first-type OFDM frame and the second-type OFDM frame, the said first and second-type OFDM frames utilize the training sequence generated by the method defined in claim 1, the said first-type OFDM frame includes two first-type training sequences and data symbols, wherein the structure characteristic M of the first-type training sequence is equal to N, and the said second-type OFDM frame includes a first-type training sequence, a second-type training sequence and data symbols, wherein the structure characteristic M of the first-type training sequence is equal to N, the structure characteristic M of the second-type training sequence is a natural number larger than or equal to 1 and less than N, which is characterized in that the communication method includes the following steps,

a) the base station transmits the first-type OFDM frame to the mobile terminal firstly;

b) the mobile terminal performs the initial acquisition for the first first-type training sequence of the first-type OFDM frame, i.e. performs timing synchronization and initial carrier frequency offset estimation, then transmits the maximum multipath channel delay determined by the initial acquisition result to the base station, then uses the second first-type training sequence of the first-type OFDM frame to perform adaptive tracking, obtains the carrier frequency offset tracking result, and finally uses the sum of the initial acquisition result and the carrier frequency offset tracking result to perform the carrier frequency offset compensation, so that the carrier frequency offset estimation of the first-type OFDM frame is achieved;

c) the base station calculates the optimal structure characteristic M according to the maximum multipath channel delay of the previous frame from the said terminal, generates the second-type OFDM frame accordingly and transmits it to the said mobile terminal again;

d) the mobile terminal performs again the initial acquisition for the first-type training sequence of the second-type OFDM frame to obtain the initial carrier frequency offset estimation of the second-type OFDM frame, then transmits the maximum multipath channel delay determined by the initial acquisition result to the base station, then uses the second second-type training sequence of the second-type OFDM frame to perform adaptive tracking, obtains the carrier frequency offset tracking result, and finally uses the sum of the initial acquisition result and the carrier frequency offset tracking result to perform the carrier frequency offset compensation, so that the carrier frequency offset estimation of the second-type OFDM frame is achieved;

e) the base station and the mobile terminal repeat step c) and d) until the end of communication.

According to the fourth aspect of the present invention, a communication system is provided, which is configured to use the first-type OFDM frame and the second-type OFDM frame, the said first-type and the second-type OFDM frame utilize the training sequence generated by the method defined in claim 1, the said first-type OFDM frame includes two first-type training sequences and data symbols, wherein the structure characteristic M of the first-type training sequence is equal to N, and the said second-type OFDM frame includes a first-type training sequence, a second-type training sequence and data symbols, wherein the structure characteristic M of the first-type training sequence is equal to N, the structure characteristic M of the second-type training sequence is a natural number larger than or equal to 1 and less than N, the communication system is characterized in that the communication system includes,

a base station including a transmitter, which communicates with the mobile terminal through the wireless channel based on the first-type and second-type OFDM frames, wherein the first frame transmitted by the base station is the first-type OFDM frame and the subsequent frames are all the second-type OFDM frames; and

a mobile terminal including a receiver, which performs the initial acquisition and adaptive tracking sequentially so as to perform timing synchronization and carrier frequency offset estimation for each frame according to the received OFDM frames, i.e. the first-type OFDM frame or the second-type OFDM frames.

The advantages of the present invention are: the present invention can realize joint frame synchronization and carrier frequency offset estimation; the precision of frame synchronization is far higher than that of the traditional algorithms; the acquisition range of the carrier frequency offset is large and can reach at most a half of the whole transmission bandwidth; the parameter M can be adjusted adaptively with the change of the wireless channel; the precision of carrier frequency offset estimation is higher than that of the traditional algorithms; and the calculation complexity is reduced while the estimation precision is enhanced.

Brief Description of the Drawings

Figure 1 shows a new training sequence provided by the present invention;

Figure 2 is a schematic diagram showing the structure of the OFDM frame according to the present invention;

Figure 3 shows an OFDM communication system using the training sequence according to the present invention;

Figure 4 is a schematic diagram showing the structure of the transmitter 3 in the base station 2 according to the present invention;

Figure 5 is a schematic diagram showing the structure of the receiver 4 in the mobile terminal 1 according to the present invention;

Figure 6 is a schematic diagram showing the intereference between the data blocks received by the mobile terminal 1;

Figure 7 is a schematic diagram showing the detailed structure of the initial acquisition section 5 and the adaptive tracking section 6;

Figure 8 shows the initial acquisition of the joint frame synchronization and carrier frequency offset acquisition unit 51;

Figure 9 shows the timing metric $M_\theta(\varepsilon)$ specific to the training sequence with the structure characteristic M=N;

Figure 10 is a schematic diagram showing the performance comparison of the training sequence of the present invention with Moose algorithm;

Figure 11 is a schematic diagram showing the comparison of the simulation result of the present invention in the wireless channel environment I with that of Moose algorithm;

Figure 12 is a schematic diagram showing the comparison of the simulation result of the present invention in the wireless channel environment II with that of Moose algorithm.

Detailed Description of the Invention

The present invention aims to realize accurate timing synchronization and highly precise and large range carrier frequency offset estimation, by joint the structure characteristics of the two traning sequences with central symmetry structure and repeat data blocks structure respectively. The present invention provides a new training sequence and an adaptive communication system and communication method for OFDM downlink joint frame synchronization and carrier frequence offset estimation on the basis of the new training sequence. The joint frame synchronization and carrier frequence offset estimation can be realized in the said communication system; the precision of frame synchronization is far higher than that of the traditional algorithms; the acquisition range of the carrier frequency offset is large and can reach at most a half of the whole transmission bandwidth; the parameter M can be adjusted adaptively with the change of the wireless channel; the precision of carrier frequency offset estimation is higher than that of the traditional algorithms; the calculation complexity is reduced while the estimation precision is enhanced.

The communication system and method of the present invention are both realized on the basis of the training sequence provided by the present invention. Before illustrating the communication system, the structure characteristic of the said training sequence will be described first.

<Training sequence>

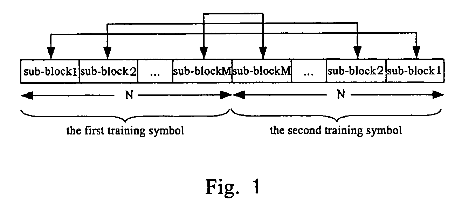

Figure 1 shows a new training sequence provided by the present invention.

As shown in Figure 1, the said new training sequence includes two training symbols with equal-length N (the first and second training sequence) but doesn't include CP (cyclic prefix), wherein N can be any natural number such as 64, 128 and 1024, etc. according to the prior specifications. The generating method of the said training sequence includes the following steps:

a) generating the first training symbol randomly with the method for generating normal data symbols;

b) subdividing the generated first training symbol logically into M sub-blocks with equal-length: sub-block 1, sub-block 2 ... sub-block M, wherein M is a natural number larger than or equal to 1 and less than or equal to N;

c) copying the said M sub-blocks in an reverse order to form the second training symbol: sub-block M, sub-block 2... sub-block 1. The first and the second training symbols together constitute the training sequence of the present invention.

Next the structure characteristic of the said training sequence will be illustrated with reference to examples. For example, when the first training symbol is {1, 2, 3, 4} and M is 2, the first training symbol is subdivided into two sub-blocks, i.e. {[1, 2], [3, 4]}. Then the said sub-blocks are copied in an reverse order to form the second training symbol {[3, 4], [1, 2]}. The first and the second training symbols together constitute the training sequence of the present invention {1,2,3,4,3,4,1,2}.

An example of the normal form of the current training sequence is {x(0), x(1), ... ,x(N-1), x(0), x(1), ... , x(N-1)}. Here {1, 2, 3, 4, 1, 2, 3, 4} is taken as an example. Suppose the correlation distance of sample "1" is 4 (i.e. the distance between the two sample "1"), the sum of the square of the correlation distance group of the said current training sequence

is 4x4$^2$=64. In the other hand, the correlation distance group of the above training sequence {1, 2, 3, 4, 3, 4, 1, 2} is 2x6$^2$ + 2x2 = 80. Since when the training sequence is adopted in downlink synchronization, the precision is proportional to the sum of the square of the correlation distance group. Therefore, the training sequence of the present invention can realize highly precise downlink synchronization as 80>64.

Based on the above, the training sequence can realize accurate timing synchronization and highly precise and large range carrier frequency offset estimation, by joint the structure characteristics of the two traning sequences with central symmetry structure and repeat data blocks structure respectively.

<OFDM frame>

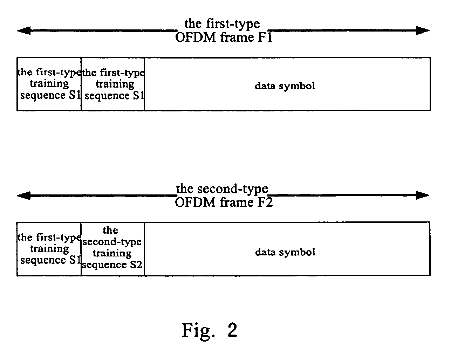

Based on the above-mentioned training sequence, an OFDM frame (the first-type OFDM frame F1 and the second-type OFDM frame F2) as shown in Figure 2 is proposed by the present invention. The said first-type OFDM frame F 1 includes a first-type training sequence S1 for initial acquisition, a first-type training sequence S 1 for adaptive tracking and data symbols; the said second-type OFDM frame F2 includes a first-type training sequence S 1 for initial acquisition, a second-type training sequence S2 for adaptive tracking and data symbols.

The structure characteristic of the first-type training sequence S 1 of the OFDM frame is M=N, i.e. the data of the second training symbol in the said first-type training sequence S 1 is the reverse repetition of the samples in the first training symbol and thus the central symmetry training sequence is created. Since the central symmetry training sequence can realize timing synchronization with high precision, it is used for the initial acquisition.

The structure characteristic M of the said second-type training sequence S2 is the optimal value ($1 \leq M$ <N) determined by the maximum multipath channel delay obtained in the initial acquisition. Since the central symmetry training sequence has low precision in the carrier frequency offset estimation in the multipath channel environment while block training sequence with repeated data-block has high precision in the carrier frequency offset estimation in the multipath channel environment, the second-type training sequence S2 can be used to finish the rest carrier frequency offset estimation in the adaptive tracking after the initial acquisition.

Next the communication system and method using the said training sequence and OFDM frame of the present invention will be illustrated in detail.

<Embodiment>

<Communication system>

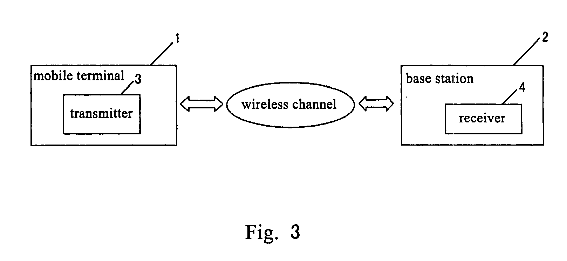

Figure 3 shows an OFDM communication system with the training sequence of the present invention.

As shown in Figure 3, the transmitter 3 in the base station 2 communicates with the mobile terminal 1 through the wireless channel in the downlink transmission in the OFDM system. The receiver 4 in the mobile terminal 1 performs the initial acquisition and adaptive tracking for the received OFDM frames so as to implement timing synchronization and carrier frequency offset estimation.

The first frame transmitted by the mobile terminal 1 in the base station 2 is the first-type OFDM frame F1 and the subsequent frames are all the second-type OFDM frames F2.

<Communication method>

In the downlink transmission in the OFDM system, actually, when a mobile terminal 1 begins to access the communication system, the initial acquisition is implemented for every frame to perform timing synchronization and carrier frequency offset estimation. After the initial acquisition, the mobile terminal 1 is required to implement carrier frequency offset tracking so as to finish the carrier frequency offset estimation and to realize accurate timing synchronization and highly precise and large range carrier frequency offset estimation.

The mobile terminal 1 performs adaptive tracking for every newly arrived frame. If the channel characteristic changes slowly, the initial acquisition can be performed every a few frames so as to readjust the timing offset and frequency offset of the said terminal user. If the channel characteristic changes fast, the performing frequency of the initial acquisition can be higher. In the fast speed mobile system, the mobile terminal 1 can perform the initial acquisition and adaptive tracking for every frame.

However, no matter the channel characteristic changes slowly or fast, for the unification of communication specifications, the terminal 1 performs the initial acquisition and adaptive tracking for all the OFDM frames from the base station 2 so as to implement accurate timing synchronization and carrier frequency offset estimation. The detailed process is as the following:

a) the base station transmits the first-type OFDM frame to the mobile terminal firstly;

b) the mobile terminal performs the initial acquisition for the first first-type training sequence of the first-type OFDM frame, i.e. performs timing synchronization and initial carrier frequency offset estimation, then transmits the optimal structure characteristic M determined by the initial acquisition result to the base station, then uses the second first-type training sequence of the first-type OFDM frame to perform adaptive tracking and the carrier frequency offset tracking result is obtained, and finally uses the sum of the initial acquisition result and the carrier frequency offset tracking result to perform the carrier frequency offset compensation, so that the carrier frequency offset estimation of the first-type OFDM frame is completed;

c) the base station generates the second-type OFDM frame according to the optimal structure characteristic M of the previous frame from the said terminal and transmits the second-type OFDM frame to the said mobile terminal;

d) the mobile terminal performs the initial acquisition for the first-type training sequence of the second-type OFDM frame again to obtain the initial carrier frequency offset estimation of the second-type OFDM frame, then transmits the optimal structure characteristic M determined by the initial acquisition result to the base station, then uses the second second-type training sequence of the second-type OFDM frame to perform adaptive tracking and the carrier frequency offset tracking result is obtained, and finally uses the sum of the initial acquisition result and the carrier frequency offset tracking result to perform the carrier frequency offset compensation, so that the carrier frequency offset estimation of the second-type OFDM frame is completed;

e) the base station and the mobile terminal repeat step c) and d) until the end of communication.

It can be seen from the above that the OFDM system of the present invention utilizes the first-type training sequence S1 (the structure characteristic is M=N, i.e. the central symmetry training sequence) to implement the initial acquisition and to realize accurate timing synchronization and the initial carrier frequency offset estimation and large range carrier frequency offset acquisition; the adaptive tracking is performed by utilizing the second second-type training sequence of the first frame from the base station or utilizing the second-type training sequence S2 (the training sequence with repeat data blocks and M is adjusted adaptively according to the change of the wireless channel characteristic) of the frames following the first frame, wherein according to the optimal value M for the next frame, which is obtained from the maximum multipath channel delay in the initial acquisition and fed back to the basestation, the highly precise carrier frequency offset estimation in the multipath channel environment is further performed and the carrier frequency offset compensation can be realized.

It should be noted that the OFDM frame of the present invention can only include the second-type training sequence S2 and data symbols, while in the present invention, only the first-type OFDM frame F 1 and the second-type OFDM frame F2 with two training sequences and data symbols are taken into consideration in the communication system.

<Transmitter 3>

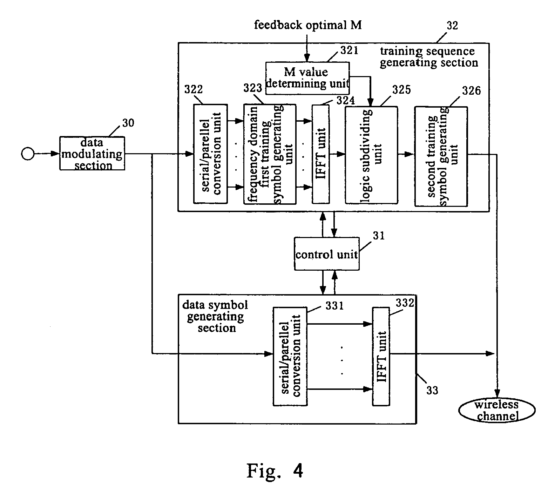

Figure 4 is a schematic diagram showing the structure of the transmitter 3 in the base station 2 according to the present invention.

As shown in Figure 4, the transmitter 3 includes a data modulating section 30, a control unit 31, a training sequence generating section 32 and a data symbol generating section 33.

The data streams are first inputted into the data modulating section 30 in the transmitter 3 for data modulation and then the bit streams are mapped into the specific constellation map so as to obtain the modulation symbols constituting the training sequence or the data symbols.

The control unit 31 is used to control the first or the second-type OFDM frames generated by the training sequence generating section 32 and the data symbol generating section 33.

<Training sequence generating section 32>

The training sequence generating section 32 includes an M value determining unit 321, a serial/parellel conversion unit 322, a frequency domain first training symbol generating unit 323, an IFFT unit 324, a logic subdividing unit 325 and a second training symbol generating unit 326.

The M value determining unit 321 first determines the structure characteristic M value ($1 \leq M \leq N$) of the training sequence. For example, when the first-type OFDM frame F1 is generated under the control of the control unit 31, the M value determining unit 321 specifies that the structure characteristic of the two first-type training sequences S 1 included in the first-type OFDM frame F 1 is M=N; when the second-type OFDM frame F2 is generated, the M value determining unit 321 specifies that the structure characteristic of the first-type training sequence S 1 is M=N and specifies the structure characteristic of the second-type training sequence S2 according to the structure characteristic optimal M fed back by the mobile terminal.

The serial/parellel conversion unit 322 converts the modulated symbols from the data modulating section 30 into parellel data. The frequency domain first training symbol generating unit 323 generates the frequency domain first training symbol with the method for generating normal data symbols according to the output of the serial/parellel conversion unit 322. Then, the IFFT unit 324 obtains the time domain first training symbol by implementing IFFT on the frequency domain first training symbol.

The logic subdividing unit 325 subdivides logically the first training symbol generated by the IFFT unit 324 into M sub-blocks with equal-length according to the M value determined by the M value determining unit 321 ($1 \leq M \leq N$ and M is a natural number). The second training symbol generating unit 326 copies the said M sub-blocks in an reverse order to form the second training symbol. Thus the first training symbol and the second training symbol together constitute the first-type training sequence S1 or the second-type training sequence S2 of the present invention.

<Data symbol generating section 33>

The modulated symbol of the data modulating section 30 is inputted into the data symbol generating section 33 under the control of the control unit 31, which is to generate the data symbols of the OFDM frames (F1 or F2) of the present invention.

The data symbol generating section 33 includes a serial/parellel conversion unit 331 and an IFFT unit 332. The serial/parellel conversion unit 331 converts the modulated symbols from the data modulating section 30 into parellel data. The IFFT unit 332 obtains the data symbols by implementing IFFT on the parellel data from the serial/parellel conversion unit 331.

The training sequence and data symbols generated by the training sequence generating section 32 and the data symbol generating section 33 can form the OFDM frame in the format of the said first-type OFDM frame F 1 or the second-type OFDM frame F2. The way to generate OFDM frame under the control of the control unit 31 can adopt the method for generating the data frame in prior art, such that the buffer temporalily stores the training sequence and the data symbols respectively to form an OFDM frame, and then the frame is transmitted to the mobile terminal 1 through the wireless channel; or the buffer whose capacity is the length of the training sequence is used and when the buffer is full, the control unit 31 is triggered to control the generating of the data symbols and creates the OFDM frame through the bus, and then the frame is transmitted to the mobile terminal 1 through the wireless channel.

<Receiver 4>

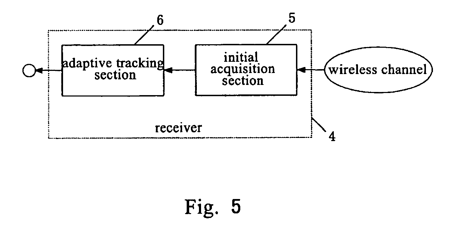

Figure 5 is a schematic diagram showing the structure of the receiver 3 in the mobile terminal 1 according to the present invention.

As shown in Figure 5, the receiver 4 includes an intial acquisition section 5 and an adaptive tracking section 6. The initial acquisition section 5 performs the joint frame synchronization and carrier frequency offset acquisition for each OFDM frame (such as the first first-type training sequence(with the structure characteristic M=N) in the first transmitted first-type OFDM frame F1 or the the first first-type training sequence S 1 (with the structure characteristic M=N) for initial acquisition in each of the subsequent second-type OFDM frame F2) received through the wireless channel. And the initial acquisition section 5 uses the detected multipath arriving training sequence to estimate the maximum multipath channel delay accurately, to specify the structure characteristic optimal value M for adaptive tracking and to feed back M to the base station 2. This kind of joint frame synchronization and carrier frequency offset acquisition is realized with the assistance of the timing metric of the training sequence, which will be described later.

The receiver 4 adds the initial carrier frequency offset result obtained by the initial acquisition section 5 and the adaptive tracking result obtained by the adaptive tracking section 6 to realize carrier frequency offset compensation.

The receiver 4 performs the initial acquisition and adaptive tracking for every newly arrived second-type OFDM frame F2 until the end of communication.

Specifically, for every first transmitted first-type OFDM frame F1, the receiver 4 utilizes the first first-type training sequence S 1 to implement the joint frame synchronization and carrier frequency offset acquisition and utilizes the second first-type training sequence S 1 to implement the adaptive tracking, so as to achieve the carrier frequency offset estimation, wherein the receiver 4 can obtain the maximum multipath channel delay, which will be fed back to the base station to form the second-type OFDM frame F2.

For each subsequently transmitted OFDM frame F2 by the base station, the structure characteristic of the second-type training sequence S2 is determined by the receiver 4 according to the optimal M fed back to the base station based on the previous OFDM frame (the first-type OFDM frame F 1 or the second-type OFDM frame F2). The initial acquisition section 5 in the receiver 4 reperforms the joint frame synchronization and carrier frequency offset acquisition for every first second-type OFDM frame F2, then the adaptive tracking section 6 performs the carrier frequency offset tracking, so as to achieve the carrier frequency offset estimation.

< Maximum multipath channel delay >

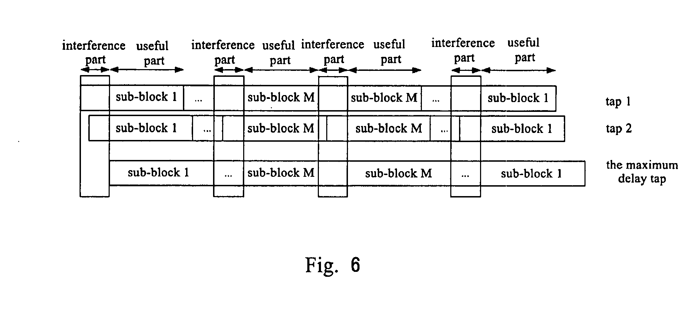

Figure 6 is used to illustrate the interference between data received by the mobile terminal so as to illustrate the structure of the initial acquisition section 5. As shown in Figure 6, due to the influence of the multipath channel, there might be interference between the neighbouring sub-blocks (such as the sub-block 1) for different training sequences, i.e. tap 1, tap 2...the maximum delay tap. The delay between tap 1 and the maximum delay tap is the maximum multipath channel delay, which is supposed to be L samples and can be obtained in the said initial acquisition. As shown in the figure, the front L samples of every sub-block form an inter-block interference area. When in the process of carrier frequency offset estimation, the samples in the inter-block interference area are not used for carrier frequency offset tracking. The rest samples except those in the inter-block interference area can be used to implement the carrier frequency offset tracking.

<Initial acquisition section 5>

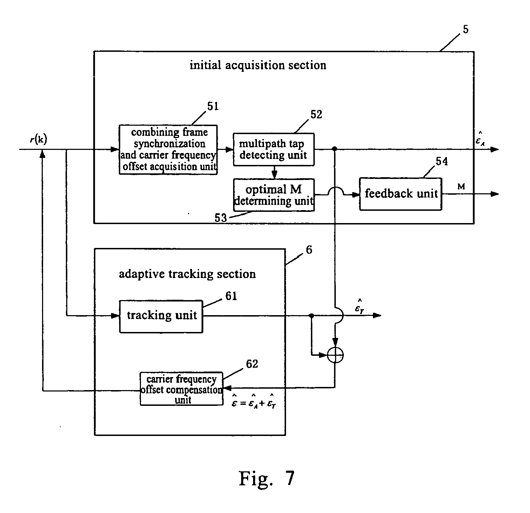

Figure 7 is a schematic diagram showing the detailed structure of the initial acquisition section 5 and the adaptive tracking section 6;

As shown in Figure 7, the initial acquisition section 5 includes a joint frame synchronization and carrier frequency offset acquisition unit 51, a multipath tap detecting unit 52, an optimal M determining unit 53 and a feedback unit 54.

The joint frame synchronization and carrier frequency offset acquisition unit 51 combines the frame synchronization and carrier frequency offset acquisition for the data sequence r(k) received through the wireless channel so as to perform the timing synchronization and the initial carrier frequency offset estimation by using the timing metric $M_\theta(\varepsilon)$ specific to the first-type training sequence S 1 (with the strcture characteristic M=N).

$$M_\theta(\varepsilon) = \frac{\left| \sum_{k=0}^{N-1} r(2N-1-k+\theta)r^*(k+\theta) \right|}{\sum_{k=0}^{2N-1} |r(k+\theta)|^2} \qquad (1)$$

Wherein the timing metric $M_\theta(\varepsilon)$ is a function of the timing offset $\theta$ and frequency offset $\varepsilon$, N is the length of the training symbol of the training sequence, r(k) is the data sequence received by the mobile terminal and $r^*(k+\theta)$ is the conjugation of the data sequence $r(k+\theta)$.

The accurate timing offset $\theta$ and frequency offset $\varepsilon$ can guarantee the timing metric $M_\theta(\varepsilon)$ reaches the local peak, i.e. the joint the frame synchronization and carrier frequency offset acquisition of the present invention is to adjust the $\theta$ and $\varepsilon$ simultaneously to get the local peak of the timing metric $M_\theta(\varepsilon)$. The process to adjust $\theta$ and $\varepsilon$ is as the following.

$$\left\{ \overset{\wedge}{\theta}; \overset{\wedge}{\varepsilon}_A \right\} = \underset{\left\{ \overset{\wedge}{\theta}; \overset{\wedge}{\varepsilon}_A \right\}}{\arg\max} \left\{ M_{\overset{\wedge}{\theta}} \left( \varepsilon - \overset{\wedge}{\varepsilon} \right) \right\}$$

$$= \underset{\left\{ \overset{\wedge}{\theta}; \overset{\wedge}{\varepsilon}_A \right\}}{\arg\max} \left\{ M_{\overset{\wedge}{\theta}} \left( \varepsilon - \overset{\wedge}{\varepsilon} \right) \right\}$$

$$= \underset{\left\{ \overset{\wedge}{\theta}; \overset{\wedge}{\varepsilon}_A \right\}}{\arg\max} \left\{ \frac{\left| \sum_{k=0}^{N-1} \tilde{r}(2N-1-k+\theta) \tilde{r}^*(k+\theta) \right|}{\sum_{k=0}^{2N-1} \left| \tilde{r}(k+\theta) \right|^2} \right\} \qquad (2)$$

Wherein ε represents the frequency offset precompensation value and $\tilde{r}(k) = r(k)e^{-\frac{j2\pi k \hat{\varepsilon}}{N}}$ represents the frequency offset precompensation operation.

When $M_\theta(\varepsilon)$ reaches the local peak, i.e. the beginning position of the training sequence and the carrier frequency offset of the system are found, the initial carrier frequency offset is $\hat{\varepsilon}_A$ and timing offset is $\hat{\theta}$.

In multipath environment, every local peak of $M_\theta(\varepsilon)$ means a path training sequence is detected at the receiver. According to the local peaks of a plurality of timing metrics obtained by the joint frame synchronization and carrier frequency offset acquisition unit 51, the multipath tap detecting unit 52 can calculate the maximum multipath channel delay (for example L samples) of the wireless channel as shown in Figure 6.

The optimal M determining unit 53 calculates the currently optimal M according to the maximum multipath channel delay from the multipath tap detecting unit 52. When the prerequisites that the accuracy of the carrier frequency offset estimation of the training sequence of the present invention is higher than the traditional algorithm (Moose algorithm) is met, the optimal M's range is [2, $\left\lfloor \frac{N}{4L} \right\rfloor - 1$]. When $M = \left\lfloor \sqrt[3]{\frac{N}{4L}} \right\rfloor$, the carrier frequency offset estimation accuracy is the highest, wherein $\lfloor x \rfloor$ represents the maximum integer less than or equal to x. And the structure characteristic optimal value M determined by the optimal M determining unit 53 is $\left\lfloor \sqrt[3]{\frac{N}{4L}} \right\rfloor$.

When the currently optimal M is obtained, the feedback unit 54 feeds back the optimal M to the base station and the initial acquisition section 5 realizes the joint frame synchronization and carrier frequency offset estimation.

It should be noted that for the first-type OFDM frame transmitted by the base station 2 in the communication system of the present invention, the initial carrier frequency offset obtained by the mobile terminal 1 is represented as $\hat{\varepsilon}_A$.

<Adaptive tracking section 6>

For every OFDM frame transmitted by the base station, since the intial carrier frequency offset acquisition accuracy is not high enough, the adaptive tracking section 6 further performs the carrier frequency offset tracking after the initial acquisition, i.e. the adaptive tracking. Wherein the adaptive tracking section 6 performs the carrier frequency offset tracking according to the second first-type training sequence S1 of the first-type OFDM frame F1 or according to the second-type training sequence of the second-type OFDM frame F2.

The adaptive tracking section 6 includes a tracking unit 61 and a carrier frequency offset compensation unit 62. The tracking unit 61 performs the carrier frequency offset tracking with the estimator $\hat{\varepsilon}_T$ according to the data sequence r(k) received through the wireless channel. The said estimator $\hat{\varepsilon}_T$ can realize the function as shown in formula (3).

$$\hat{\varepsilon}_T = 3\sum_{p=1}^{M}\frac{2(M-p)+1}{4M^2-1}\times\frac{\arg\left\{\sum_{k=(p-1)D+L}^{pD-1} r(k+2D(M-p)+D)r^*(k)\right\}}{2\pi} \qquad (3)$$

Wherein P is an index with the range from 1 to M, $D=\dfrac{N}{M}$, the said M is the structure characteristic optimal M obtained by the mobile terminal in the initial carrier frequency offset acquisition and fed back to the base station.

Since the front L samples of every sub-block of the training sequence received by the mobile terminal 1 are influenced by the multipath channel and thus the interference between sub-blocks exists, they are not used to implement carrier frequency offset tracking. After the carrier frequency offset tracking is achieved by the estimator with formula (3), i.e. after obtaining the $\hat{\varepsilon}_T$ value, the receiver 4 calculates the estimated overall carrier frequency offset by adding the initial carrier frequency offset $\hat{\varepsilon}_A$ with the adaptive tracking result $\hat{\varepsilon}_T$ obtained by the initial acquisition section 5, and feeds back the sum to the carrier frequency offset compensation unit 62 for carrier frequency offset compensation, so that the carrier frequency offset tracking is completed.

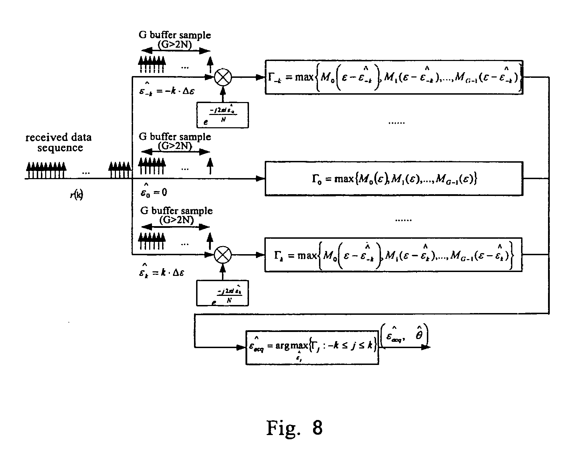

Figure 8 shows in detail the initial acquisition of the joint frame synchronization and carrier frequency offset acquisition unit 51. As shown in Figure 8, the joint frame synchronization and carrier frequency offset acquisition unit 51 first utilizes a buffer with the capacity G (not shown in the figure) to store a received data sequence r(k). The said r(k) includes an integrated first-type training sequence S1 (the training sequence with the central symmetry structure) with the structure characteristic M=N. Then in the initial acquisition, $M_\theta(\varepsilon)$ specific to the first-type training sequence S1 is used to specify the beginning position of the said training sequence.

2k+ 1 carrier frequency precompensation values $\hat{\varepsilon}$, i.e. (-$k\Delta\varepsilon$, -(k-1)$\Delta\varepsilon$, ..., -$\Delta\varepsilon$, 0, $\Delta\varepsilon$ ,..., $k\Delta\varepsilon$) are required for the initial acquisition to implement the carrier frequncy precompensation on the stored data sequence. Every carrier frequency precompensation value is used to compensate a data sequence buffered, wherein 1 < $k\Delta\varepsilon$ < $DFTlength$ / 4.

The joint frame synchronization and carrier frequency offset acquisition unit 51 utilizes the carrier frequency offset precompensation operation such as $\tilde{r}(k) = r(k)e^{-\frac{j2\pi l\hat{\varepsilon}}{N}}$ to calculate the value of the timing metric $M_\theta(\varepsilon)$

of every sequence after precompensated sample by sample (from the 0th to the (G-1)th sample), and to record the position with the maximum $\Gamma$, wherein 1 represents an index of the buffered data in the buffer and its range is 1~G.

When a carrier frequency offset value for percompensation is closest to the actual carrier frequency offset value, the postion where $M_\theta(\varepsilon)$ reaches the maximum value is highly probable the beginning position of the training sequence. In all the 2k+1 precompensation sequences, if the position where there is the maximum $M_\theta(\varepsilon)$ value is found,

the beginning position ($\hat{\theta}$) of the training sequence and the carrier frequency offset acquisition result $(\hat{\varepsilon}_{acq})$ are also

found. Formulae (1) and (2) show that the largest range of the carrier frequency offset acquisition of the present invention is (-N/4, N/4), i.e. the largest acquisition range can reach a half of the whole transmission bandwidth, so the carrier frequency offset precompensation value in Figure 8 should meet $k \times \Delta\varepsilon \le \dfrac{N}{4}$, wherein N is the DFTlength/4, $\Delta\varepsilon$ > 0 is the carrier frequency offset precompensation interval. The smaller $\Delta\varepsilon$ is, the higher the carrier frequency offset acquisition accuracy is and the calculation complexity during the acquisition process increases accordingly. $\Delta\varepsilon$ is normally taken as 0.1 in the present invention. Formula (3) shows the carrier frequency offset tracking range of the present algorithm is $|\varepsilon| < \dfrac{M}{2(2M-1)}$. In order to guarantee the carrier frequency offset tracking can work properly, $\Delta\varepsilon < \dfrac{M}{2(2M-1)}$ should be met. It can be seen from the above that, compared with the current algorithms, the present invention reduces the calculation complexity while enhances the estimation precision.

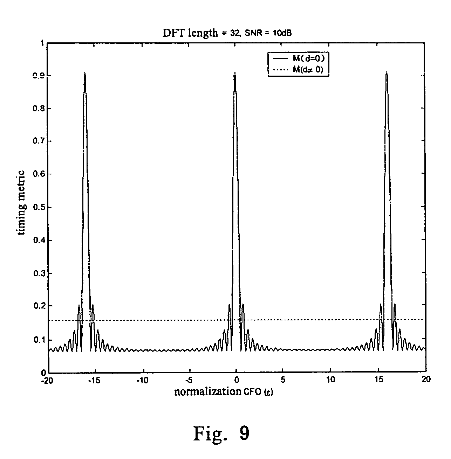

Figure 9 shows the timing metric $M_\theta(\varepsilon)$ specific to the training sequence with the structure characteristic M=N. The Y-coordinate in Figure 9 represents the timing metric, the X-coordinate represents the carrier frequency offset $\varepsilon$, d represents the first to the last sample in the G samples (i.e. $0 \le d < G$-1) buffered in the buffer of the joint frame synchronization and carrier frequency offset acquisition unit 51. Figure 7 shows the timing metric $M_\theta(\varepsilon)$ is the function of the timing offset $\theta$ and the carrier frequency offset $\varepsilon$. While at the accurate timing synchronization position, i.e. $\theta$ is the beginning postion of the received training sequence, the timing metric $M_\theta(\varepsilon)$ is the periodic function of $\varepsilon$ and the period is N/2. $M_\theta(\varepsilon)$ has one peak value during every period. $M_\theta(\varepsilon)$ approachs closely to the peak value only when it is at the accurate timing synchronization position and the carrier frequency offset of the precompensated training sequence is close to 0. Based on this characteristic, the present invention can realize accurately the joint frame synchronization and carrier frequency offset acquisition.

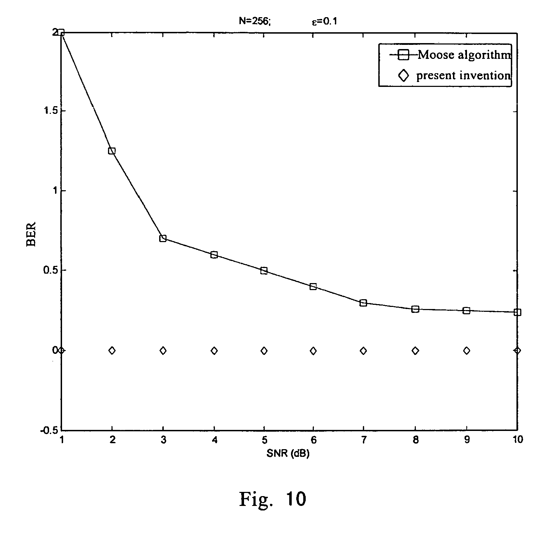

Figure 10 is a schematic diagram showing the performance comparison of the training sequence of the present invention with Moose algorithm. The X-coordinate represents the SNR and the Y-coordinate represents BER. The training symbol length N of the training sequence is 256, frequency offset $\varepsilon$=0.1 and the simulation environment is supposed to have a 4- paths independent fading Rayleigh Channel, the power of the 4 paths are respectively 0.93, 0.34217, 0.12588, 0.0463, the delay of the 4 paths are respectively 0, 2, 4, 6 samples. When SNR is 10dB, the mean square error of the Moose algorithm is 0.24 and that of the present invention is 0. Figure 10 shows the training sequence of the present invention has a higher accuracy.

Table 1 is the environment of the two wireless channels (Scenario I and Scenario II) used in performance analysis of the present invention.

Table 1: environment of the two wireless channels in performance analysis

| | Subcarrier modulation | QPSK | | | |
|---|---|---|---|---|---|
| Scenario I | Delay (us) | 0 | | 0.1 | |
| | Power (dB) | 0 | | -4.3 | |
| | CFO (Hz) | 488.3 | | | |
| | Subcarrier modulation | QPSK | | | |
| Scenario II | Delay (us) | 0 | 0.2 | 0.4 | 0.7 |
| | Power (dB) | 0 | -4.3 | -8.68 | -17.38 |
| | CFO (Hz) | 488.3 | | | |

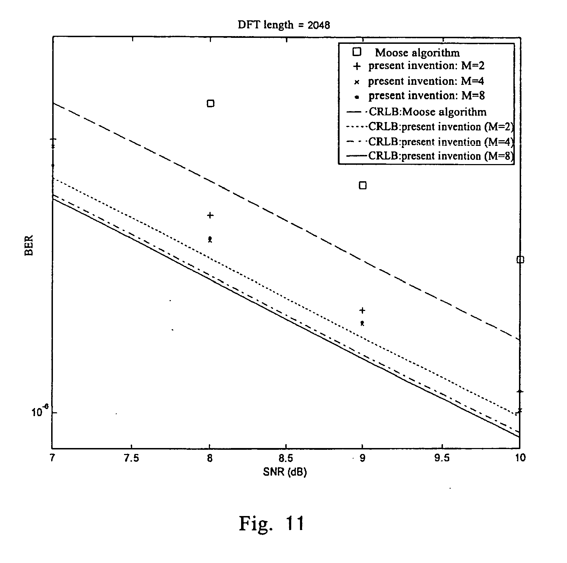

Figure 11 is a schematic diagram showing the comparison of the simulation result of the present invention in the wireless channel environment I with that of Moose algorithm. The X-coordinate represents the SNR and the Y-coordinate represents BER. The simulation result shows when M is equal to 2, 4, 8, the estimation accuracy is higher than that of the Moose algorithm and when M is equal to 8, the estimation accuracy is the highest. For example, when M=2 in the present invention, the performance is 1.4dB higher than that of the Moose algorighm; when M=8, the performance enhances about 1.7dB. The optimal M is 8 in the said channel environment I.

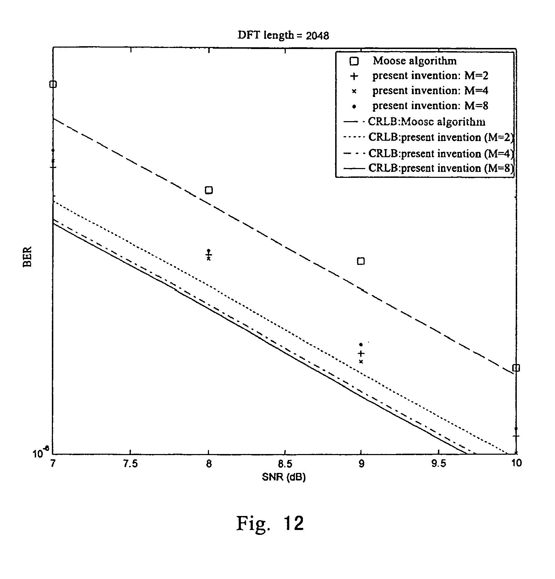

Figure 12 is a schematic diagram showing the comparison of the simulation result of the present invention in the wireless channel environment II with that of Moose algorithm. The X-coordinate represents the SNR and the Y-coordinate represents BER. The simulation result shows when M is equal to 2, 4, 8, the estimation accuracy is still higher than that of the Moose algorithm and when M is equal to 4, the estimation accuracy is the highest. For example, when M=8 in the present invention, the performance is 0.7dB higher than that of the Moose algorighm; when M=2, the performance enhances about 0.8dB; when M=4, the performance enhances about 0.9dB. The optimal M is 4 in the said channel environment II.

< Modified embodiment >

<Communication system>

The structure of the mobile terminal 1 and the base station 2 is not limited to the above description. Figure 7 shows that the optimal M determining unit 53 is used to calculate the currently optimal M according to the maximum multipath channel delay from the multipath tap detecting unit 52. The said multipath tap detecting unit 52 can directly feed back the maximum multipath channel delay L to the base station 2 through the feedback unit 54, while the M value determining unit 321 in the base station as shown in Figure 4 can calculte the optimal M according to the said fed back maximum multipath channel delay L. The other structures and connecting manner of the mobile terminal 1 and the base station 2 according to the modified embodiment are the same with the above embodiments and the same description will be omitted.

<Communication method>

The communication method of the present invention according to the modified embodiment is the same with that of the above embodiments mostly and only the difference will be illustrated here.

In step b), the mobile terminal transmits the maximum multipath channel delay determined by the initial acquisition results to the base staition, not the structure characteristic optimal M.

In step c), the base station determines the structure characteristic optimal M and generates the second-type OFDM frame according to the maximum multipath channel delay for the previous frame,

As same in step b), in step d) the mobile terminal transmits the maximum multipath channel delay determined by the initial acquisition result to the base station, not the structure characteristic optimal M.

According to the modified embodiment of the present invention, the base station 2 can calculates the structure characteristic optimal M quickly according to the maximum multipath channel delay.

The above discussion proves the present invention can realize joint frame synchronization and carrier frequency offset estimation; the precision of frame synchronization is far higher than that of the traditional algorithms; the acquisition range of the carrier frequency offset is large and can reach at most a half of the whole transmission bandwidth; the parameter M can be adjusted adaptively with the change of the wireless channel; the precision of carrier frequency offset estimation is higher than that of the traditional algorithms; the calculation complexity is reduced while the estimation precision is enhanced.

**Claims**

1. A method for generating a training sequence for joint frame synchronization and carrier frequency offset estimation, the said training sequence includes a first training symbol and a second training symbol with equal-length, but without CP, which is **characterized in that**,
   generating the first training symbol randomly according to the method for generating normal data symbols;
   subdividing the generated first training symbol logically into M sub-blocks with equal-length, wherein the structure characteristic M is a natural number larger than or equal to 1 and less than or equal to N; and
   copying the said M sub-blocks in an reverse order to form the second training symbol, which together with the first training symbol constitute the said training sequence.

2. A communication method that uses the first-type OFDM frame and the second-type OFDM frame, the said first and second-type OFDM frames utilize the training sequence generated by the method defined in claim 1, the said first-type OFDM frame includes two first-type training sequences and data symbols,
   wherein the structure characteristic M of the first-type training sequence is equal to N, and the said second-type OFDM frame includes a first-type training sequence, a second-type training sequence and data symbols, wherein the structure characteristic M of the first-type training sequence is equal to N, the structure characteristic M of the second-type training sequence is a natural number larger than or equal to 1 and less than N, which is **characterized in that** the communication method includes the following steps,

a) the base station transmits the first-type OFDM frame to the mobile terminal firstly;

b) the mobile terminal performs the initial acquisition for the first-type training sequence of the first-type OFDM frame, i.e. performs timing synchronization and initial carrier frequency offset estimation, then transmits the optimal structure characteristic M determined by the initial acquisition result to the base station, then uses the second first-type training sequence of the first-type OFDM frame to perform adaptive tracking, obtains the carrier frequency offset tracking result, and finally uses the sum of the initial acquisition result and the carrier frequency offset tracking result to perform the carrier frequency offset compensation, so that the carrier frequency offset estimation of the first-type OFDM frame is achieved;

c) the base station generates the second-type OFDM frame according to the optimal structure characteristic M of the previous frame from the said terminal and transmits it to the said mobile terminal again;

d) the mobile terminal performs again the initial acquisition for the first-type training sequence of the second-type OFDM frame to obtain the initial carrier frequency offset of the second-type OFDM frame, then transmits the currently optimal structure characteristic M determined by the initial acquisition result to the base station, then uses the second second-type training sequence of the second-type OFDM frame to perform adaptive tracking, obtains the carrier frequency offset tracking result, and finally uses the sum of the initial acquisition result and the carrier frequency offset tracking result to perform the carrier frequency offset compensation, so that the carrier frequency offset estimation of the second-type OFDM frame is achieved;

e) the base station and the mobile terminal repeat step c) and d) until the end of communication.

3.  A communication method that uses the first-type OFDM frame and the second-type OFDM frame, the said first and second-type OFDM frames utilize the training sequence generated by the method defined in claim 1, the said first-type OFDM frame includes two first-type training sequences and data symbols, wherein the structure characteristic M of the first-type training sequence is equal to N, and the said second-type OFDM frame includes a first-type training sequence, a second-type training sequence and data symbols, wherein the structure characteristic M of the first-type training sequence is equal to N, the structure characteristic M of the second-type training sequence is a natural number larger than or equal to 1 and less than N, which is **characterized in that** the communication method includes the following steps,

a) the base station transmits the first-type OFDM frame to the mobile terminal firstly;

b) the mobile terminal performs the initial acquisition for the first first-type training sequence of the first-type OFDM frame, i.e. performs timing synchronization and initial carrier frequency offset estimation, then transmits the maximum multipath channel delay determined by the initial acquisition result to the base station, then uses the second first-type training sequence of the first-type OFDM frame to perform adaptive tracking, obtains the carrier frequency offset tracking result, and finally uses the sum of the initial acquisition result and the carrier frequency offset tracking result to perform the carrier frequency offset compensation, so that the carrier frequency offset estimation of the first-type OFDM frame is achieved;

c) the base station calculates the optimal structure characteristic M according to the maximum multipath channel delay of the previous frame from the said terminal, generates the second-type OFDM frame accordingly and transmits it to the said mobile terminal again;

d) the mobile terminal performs again the initial acquisition for the first-type training sequence of the second-type OFDM frame to obtain the initial carrier frequency offset estimation of the second-type OFDM frame, then transmits the maximum multipath channel delay determined by the initial acquisition result to the base station, then uses the second second-type training sequence of the second-type OFDM frame to perform adaptive tracking, obtains the carrier frequency offset tracking result, and finally uses the sum of the initial acquisition result and the carrier frequency offset tracking result to perform the carrier frequency offset compensation, so that the carrier frequency offset estimation of the second-type OFDM frame is achieved;

e) the base station and the mobile terminal repeat step c) and d) until the end of communication.

4.  A communication system that is configured to use the first-type OFDM frame and the second-type OFDM frame, the said first-type and the second-type OFDM frame utilize the training sequence generated by the method defined in claim 1, the said first-type OFDM frame includes two first-type training sequences and data symbols, wherein the structure characteristic M of the first-type training sequence is equal to N, and the said second-type OFDM frame includes a first-type training sequence, a second-type training sequence and data symbols, wherein the structure characteristic M of the first-type training sequence is equal to N, the structure characteristic M of the second-type training sequence is a natural number larger than or equal to 1 and less than N, which is **characterized in that** the communication system includes,

a base station (2) including a transmitter (3), which communicates with the mobile terminal (1) through the wireless channel based on the first-type and second-type OFDM frames, wherein the first frame transmitted by the base station is the first-type OFDM frame and the subsequent frames are all the second-type OFDM frames; and
a mobile terminal (1) including a receiver (4), which performs the initial acquisition and adaptive tracking sequentially so as to perform timing synchronization and carrier frequency offset estimation for each frame according to the received OFDM frames, i.e. the first-type OFDM frame or the second-type OFDM frames.

5. A communication system as defined in claim 4, which is **characterized in that** the transmitter (3) includes,
a data modulating section (30) that is configured to modulate the data streams and to map them to the specific constellation map so as to obtain the modulation symbols cof the training sequence or the data symbols;
a control unit (31) that is configured to control the generating of the first or the second-type OFDM frames;
a training sequence generating section (32) that is configured to utilize the output of the data modulating section (30) to generate the first-type or the second-type training sequences under the control of the control unit (31); and
a data symbol generating section (33) that is configured to utilize the output of the data modulating section (30) to generate the data symbols under the control of the control unit (31),
wherein the said training sequence and the data symbols are used to constitute the first-type or the second-type OFDM frame.

6. A communication system as defined in claim 5, which is **characterized in that** the training sequence generating section (32) includes,
an M value determining unit (321) that is configured to specify the structure characteristic of the training sequence to be generated according to the optimal value fed back by the base station or according to the first-type training sequence;
a serial/parellel conversion unit (322) that is configured to convert the modulated symbols from the data modulating section (30) into parellel data;
a frequency domain first training symbol generating unit (323) that is configured to generate the frequency domain first training symbol with the method for generating normal data symbols according to the output of the serial/parellel conversion unit (322);
an IFFT unit (324) that is configured to obtain the time domain first training symbol by implementing Inverse Fast Fourier Transform (IFFT) on the frequency domain first training symbol;
a logic subdividing unit (325) that is configured to subdivide logically the first training symbol generated by the IFFT unit (324) into M sub-blocks with equal-length according to the M value determined by the M value determining unit (321), wherein $1 \leq M \leq N$ and M is a natural number; and
a second training symbol generating unit (326) that is configured to copy the said M sub-blocks in an reverse order to form the second training symbol,
wherein the first training symbol and the second training symbol together constitute the said first or second-type training sequence.

7. A communication system as defined in claim 5, which is **characterized in that** the data symbol generating section (33) includes,
a serial/parellel conversion unit (331) that is configured to convert the modulated symbols from the data modulating section (30) into parellel data; and
an IFFT unit (332) that is configured to obtain the data symbols by implementing IFFT on the parellel data from the serial/parellel conversion unit (331).

8. A communication system as defined in claim 4, which is **characterized in that** the receiver (4) includes,
an initial acquisition section (5) that is configured to perform the initial acquisition according to the first-type training sequence in every OFDM frame received through the wireless channel, i.e. perform joint frame synchronization and carrier frequency offset acquisition so as to obtain the timing synchronization and the initial carrier frequency offset, and is configured to estimate maximum multipath channel delay of the detected training sequence, determine the optimal structure characteristic M and feed it back to the base station (2) according to the training sequences arrived through multipath, wherein the initial acquisition section (5) only performs the initial acquisition for the first first-type training sequence of the first-type OFDM frame; and
an adaptive tracking section (6) that is configured to further perform the carrier frequency offset tracking, i.e. adaptive tracking, after the initial acquisition for the second second-type training sequence of the first-type OFDM frame or every second-type training sequence of the second-type OFDM frame received through the wireless channel, to obtain the result of the carrier frequency offset tracking, wherein the structure characteristic of every second-type training sequence of the second-type OFDM frame is the optimal M fed back to the base station (2) according to the previous frame,
wherein, the initial acquisition section (5) and the adaptive tracking section (6) take the sum of the initial carrier frequency offset and the carrier frequency offset tracking result as the total carrier frequency offset for every OFDM frame transmitted from the base station.

**9.** A communication system as defined in claim 8, which is **characterized in that** the initial acquisition section (5) includes,
a joint frame synchronization and carrier frequency offset acquisition unit (51) that is configured to perform the joint frame synchronization and carrier frequency offset acquisition for the received data sequence through the wireless channel so as to obtain the timing synchronization and the initial carrier frequency offset by using the timing metric $M_\theta(\varepsilon)$ specific to the first-type training sequence;
a multipath tap detecting unit (52) that is configured to obtain the maximum multipath channel delay according to the result from the joint frame synchronization and carrier frequency offset acquisition unit (51);
an optimal M determining unit (53) that is configured to calculate the currently optimal M according to the maximum multipath channel delay from the multipath tap detecting unit (52); and
a feedback unit (54) that is configured to feed back the optimal M to the base station.

**10.** A communication system as defined in claim 9, which is **characterized** to adjust the timing offset $\theta$ and frequency offset $\varepsilon$ of the timing metric $M_\theta(\varepsilon)$ simultaneously to obtain the local peak of the timing metric $M_\theta(\varepsilon)$, i.e. to realize joint frame synchronization and carrier frequency offset acquisition and obtain the initial carrier frequency offset and timing offset,

$$M_\theta(\varepsilon) = \frac{\left| \sum_{k=0}^{N-1} r(2N-1-k+\theta)r^*(k+\theta) \right|}{\sum_{k=0}^{2N-1} |r(k+\theta)|^2}$$

wherein the timing metric $M_\theta(\varepsilon)$ is the function of the timing offset $\theta$ and frequency offset $\varepsilon$, N is the length of the training symbol of the training sequence, r(k) is the data sequence received by the mobile terminal and $r^*(k+\theta)$ is the conjugation of the data sequence $r(k + \theta)$.

**11.** A communication system as defined in claim 10, which is **characterized in that**,
the maximum multipath channel delay is obtained according to the local peak of a plurality of timing metrics $M_\theta(\varepsilon)$.

**12.** A communication system as defined in claim 11, which is **characterized in that**,
the structure characteristic optimal value M determined by the optimal M determining unit (53) is

$$M = \left\lfloor \sqrt[3]{\frac{N}{4L}} \right\rfloor,$$ wherein $\left\lfloor \sqrt[3]{\frac{N}{4L}} \right\rfloor$ is the largest integer less than or equal to $\sqrt[3]{\frac{N}{4L}}$, L is the maximum multipath channel delay and N is the length of the training symbol of the training sequence.

**13.** A communication system as defined in claim 8, which is **characterized in that** the adaptive tracking section (6) includes, a tracking unit (61) that is configured to obtain the carrier frequency offset tracking result $\hat{\varepsilon}_T$ by using

the estimator $\hat{\varepsilon}_T$ to track the carrier frequency offset according to the data sequence r(k) received through the wireless channel,

$$\overset{\wedge}{\varepsilon_T} = 3 \sum_{p=1}^{M} \frac{2(M-p)+1}{4M^2-1} \times \frac{\arg\left\{\sum_{k=(p-1)D+L}^{pD-1} r(k+2D(M-p)+D)r^*(k)\right\}}{2\pi}$$

wherein P is an index with the range from 1 to M, $D = \dfrac{N}{M}$, the said M is the structure characteristic optimal M obtained by the mobile terminal (1) in the initial carrier frequency offset acquisition and fed back to the base station (2); and a carrier frequency offset compensation unit (62) that is configured to perform the carrier frequency offset compensation according to the said sum of the initial acquisition result and the carrier frequency offset tracking result.

**14.** A communication system as defined in claim 5, which is **characterized in that** the training sequence generating section (32) includes,

an M value determining unit (321) that is configured to determine the structure characteristic of the training sequence to be generated according to the optimal value fed back by the base station or by the first-type training sequence;
a serial/parellel conversion unit (322) that is configured to convert the modulated symbols from the data modulating section (30) into parellel data;
a frequency domain first training symbol generating unit (323) that is configured to generate the frequency domain first training symbol with the method for generating normal data symbols according to the output of the serial/parellel conversion unit (322);
an IFFT unit (324) that is configured to obtain the time domain first training symbol by implementing IFFT on the frequency domain first training symbol;
a logic subdividing unit (325) that is configured to subdivide logically the first training symbol generated by the IFFT unit (324) into M sub-blocks with equal-length, wherein $1 \le M \le N$ and M is a natural number; and
a second training symbol generating unit (326) that is configured to copy the said M sub-blocks in an reverse order to form the second training symbol,
wherein the first training symbol and the second training symbol together constitute the said first or second-type training sequence.

**15.** A communication system as defined in claim 5, which is **characterized in that** the data symbol generating section (33) includes,
a serial/parellel conversion unit (331) that is configured to convert the modulated symbols from the data modulating section (30) into parellel data; and
an IFFT unit (332) that is configured to obtain the data symbol by implementing IFFT on the parellel data from the serial/parellel conversion unit (331).

**16.** A communication system as defined in claim 4, which is **characterized in that** the receiver (4) includes,

an initial acquisition section (5) that is configured to perform the initial acquisition for the first-type training sequence in every OFDM frame received through the wireless channel, i.e. perform the joint frame synchronization and carrier frequency offset acquisition so as to obtain the timing synchronization and the initial carrier frequency offset, and is configured to obtain the maximum multipath channel delay and feed it back to the base station (2), wherein the initial acquisition section (5) only performs the initial acquisition for the first first-type training sequence of the first-type OFDM frame; and
an adaptive tracking section (6) that is configured to further perform the carrier frequency offset tracking, adaptive tracking, after the initial acquisition for the second second-type training sequence of the first-type OFDM frame or every second-type training sequence of the second-type OFDM frame received through the wireless channel, to obtain the result of the carrier frequency offset tracking,
wherein the structure characteristic of every second-type training sequence of the second-type OFDM frame is the optimal M calculated by the base station (2) according to the maximum multipath channel delay fed back for the previous frame,
wherein, the initial acquisition section (5) and the adaptive tracking section (6) take the sum of the initial carrier frequency offset and the carrier frequency offset tracking result as the total carrier frequency offset for the OFDM frame transmitted from the base station.

17. A communication system as defined in claim 16, which is **characterized in that** the initial acquisition section (5) includes,
a joint frame synchronization and carrier frequency offset acquisition unit (51) that is configured to perform the joint frame synchronization and carrier frequency offset acquisition for the received data sequence through the wireless channel so as to obtain the timing synchronization and the initial carrier frequency offset by using the timing metric $M_\theta(\varepsilon)$ specific to the first-type training sequence;
a multipath tap detecting unit (52) that is configured to obtain the maximum multipath channel delay according to the result from the joint frame synchronization and carrier frequency offset acquisition unit (51); and
a feedback unit (54) that is configured to feed back the maximum multipath channel delay to the base station.

18. A communication system as defined in claim 17, which is **characterized** to adjust the timing offset $\theta$ and frequency offset $\varepsilon$ of the timing metric $M_\theta(\varepsilon)$ simultaneously to obtain the local peak of the timing metric $M_\theta(\varepsilon)$, i.e. to realize joint frame synchronization and carrier frequency offset acquisition and obtain the initial carrier frequency offset and timing offset,

$$M_\theta(\varepsilon) = \frac{\left| \sum_{k=0}^{N-1} r(2N-1-k+\theta) r^*(k+\theta) \right|}{\sum_{k=0}^{2N-1} \left| r(k+\theta) \right|^2}$$

wherein the timing metric $M_\theta(\varepsilon)$ is a function of the timing offset $\theta$ and frequency offset $\varepsilon$, N is the length of the training symbol of the training sequence, r(k) is the data sequence received by the mobile terminal and $r^*(k+\theta)$ is the conjugation of the data sequence $r(k + \theta)$.

19. A communication system as defined in claim 18, which is **characterized in that**,
the maximum multipath channel delay is obtained according to the local peak of a plurality of timing metrics $M_\theta(\varepsilon)$.

20. A communication system as defined in claim 19, which is **characterized in that**,
the structure characteristic optimal M determined by the M value determining unit (321) is $M = \left\lfloor \sqrt[3]{\dfrac{N}{4L}} \right\rfloor$, where-

in $\left\lfloor \sqrt[3]{\dfrac{N}{4L}} \right\rfloor$ is the largest integer less than or equal to $\sqrt[3]{\dfrac{N}{4L}}$, L is the maximum multipath channel delay and N is the length of the training symbol of the training sequence.

21. A communication system as defined in claim 16, which is **characterized in that** the adaptive tracking section (6) includes, a tracking unit (61) that is configured to obtain the carrier frequency offset tracking result $\hat{\varepsilon}_T$ by using

the estimator $\hat{\varepsilon}_T$ to track the carrier frequency offset according to the data sequence r(k) received through the wireless channel,

$$\hat{\varepsilon}_T = 3 \sum_{p=1}^{M} \frac{2(M-p)+1}{4M^2-1} \times \frac{\arg\left\{ \sum_{k=(p-1)D+L}^{pD-1} r\left(k + 2D(M-p)+D\right)r^*(k) \right\}}{2\pi}$$

wherein P is an index with the range from 1 to M, $D = \dfrac{N}{M}$ , the said M is the structure characteristic optimal M calculated by the base station (2) after getting the maximum multipath delay which is obtained by the mobile terminal (1) in the initial carrier frequency offset acquisition; and

a carrier frequency offset compensation unit (62) that is configured to perform the carrier frequency offset compensation according to the said sum of the initial acquisition result and the carrier frequency offset tracking result.

19

| sub-block1 | sub-block2 | ... | sub-blockM | sub-blockM | ... | sub-block2 | sub-block 1 |

the first training symbol          the second training symbol

Fig. 1

the first-type
OFDM frame F1

| the first-type training sequence S1 | the first-type training sequence S1 | data symbol |
|---|---|---|

the second-type
OFDM frame F2

| the first-type training sequence S1 | the second-type training sequence S2 | data symbol |
|---|---|---|

Fig. 2

Fig. 3

Fig. 4

Fig. 5

interference part | useful part | interference part | useful part | interference part | useful part | interference part | useful part

| sub-block 1 | ... | sub-block M | sub-block M | ... | sub-block 1 | tap 1 |
| sub-block 1 | ... | sub-block M | sub-block M | ... | sub-block 1 | tap 2 |
| sub-block 1 | ... | sub-block M | sub-block M | ... | sub-block 1 | the maximum delay tap |

Fig. 6

initial acquisition section

5

51

combining frame
synchronization
and carrier frequency
offset acquisition unit

52

multipath tap
detecting unit

$\hat{\varepsilon}_A$

54

feedback unit

M

optimal M
determining unit

53

$r(k)$

adaptive tracking section

6

61

tracking unit

$\hat{\varepsilon}_T$

62

carrier frequency
offset compensation
unit

$\hat{\varepsilon} = \hat{\varepsilon}_A + \hat{\varepsilon}_T$

Fig. 7

Fig. 8

Fig. 9

Fig. 10

Fig. 11

Fig. 12

**REFERENCES CITED IN THE DESCRIPTION**

**Non-patent literature cited in the description**

- **J.-J. VAN DE BEEK ; M. SANDELL.** ML estimation of time and frequency offset in OFDM systems. *IEEE Trans. Signal Processing,* July 1997, vol. 45, 1800-1805
- **H. NOGAMI ; T. NAGASHIMA.** A frequency and timing period acquisition technique for OFDM system. *Personal, Indoor and Mobile Radio Commun.,* 27 September 1995, 1010-1015
- **M.MORELLI ; V.MENGALI.** An improved frequency offset estimator for OFDM applications. *IEEE Commun. Lett.,* March 1999, vol. 3, 75-77

- **T. KELLER ; L. PIAZZO.** Orthogonal Frequency Division Multiplex Synchronization Techniques for Frequency-Selective Fading Channels. *IEEE Journal on Selected Areas in Communications,* June 2001, vol. 19 (6), 999-1008
- **T. M. SCHMIDL ; D. C. COX.** Robust Frequency and Timing Synchronization for OFDM. *IEEE Trans. Comm.,* December 1997, vol. 45, 1613-1621
- **P.H. MOOSE.** A technique for orthogonal frequency division multiplexing frequency offset correction. *IEEE Trans. Comm.,* October 1994, vol. 42, 2908-2914
- **Z.ZHANG ; M.ZHAO.** Frequency offset estimation with fast acquisition in OFDM system. *IEEE Commun. Lett.,* March 2004, vol. 8, 171-173